# EUROPÄISCHE PATENTSCHRIFT

(11) **EP 2 444 263 B1**
(45) Veröffentlichungstag und Bekanntmachung des Hinweises auf die Patenterteilung: **06.08.2014**
(21) Anmeldenummer: 11009620.3
(22) Anmeldetag: 23.09.2003
(51) Int. Cl.: B60J 3/02, B60J 1/20, B60J 1/18, B60J 1/02, B60J 7/00

(54) **Kraftfahrzeug mit Sonnenblende**
Motor vehicle with sun visor
Véhicule automobile doté d'un pare-soleil

(30) Priorität: 26.09.2002 DE 10245245
(43) Veröffentlichungstag der Anmeldung: 25.04.2012
(62) Teilanmeldung aus: 03021415.9
(73) Patentinhaber: GM Global Technology Operations LLC, Detroit, MI 48265-3000 (US)
(72) Erfinder: Hallik, Matthias, 65207 Wiesbaden (DE)
(74) Vertreter: Strauss, Peter

(56) Entgegenhaltungen:
- EP-A1- 1 375 222
- US-A- 4 674 789

## Beschreibung

Die vorliegende Erfindung betrifft ein Kraftfahrzeug, das an einer Frontfensterscheibe mit einer klappbaren Sonnenblende ausgestattet ist. Kraftfahrzeuge, bei denen Fahrer oder Beifahrer eine solche Sonnenblende herunterklappen können, um ihre Augen vor tief stehender Sonne zu schützen, sind allgemein bekannt.

In DE 199 10949 A1 ist vorgeschlagen worden, die herkömmliche klappbare Sonnenschutzblende durch ein motorgetriebenes Rollo zu ersetzen. Anders als eine klappbare Sonnenblende ist ein solches Rollo geeignet, um einen Fahrzeuginnenraum insgesamt gegenüber Sonneneinstrahlung zu schützen und so die Aufheizung des Fahrzeuginnenraums bei einem in der Sonne geparkten Fahrzeug zu vermindern. Ein Nachteil des Rollos ist die lange Zeit, die zu seiner Verstellung erforderlich ist. Um sich, z.B. nach Überfahren einer Hügelkuppe, vor plötzlicher Blendung zu schützen, kann der Fahrer die klappbare Sonnenblende binnen Sekundenbruchteilen in Position bringen. Eine entsprechend schnelle Verstellung des Rollos würde hohe Anforderungen an dessen Mechanik stellen und hätte überdies den Nachteil, dass die Zielstellung des Rollos, in der dieses einen wirksamen Blendschutz liefert, ohne das Gesichtsfeld des Fahrers unnötig einzuschränken, schwierig einzustellen ist. Ein Rollo, das bei fahrendem Fahrzeug zu weit ausfährt und so das Gesichtsfeld des Fahrers einengt, ist aber mindestens genauso gefährlich wie eine Blendung.

Aus FR 2 782 973 A1 ist eine Kraftfahrzeugkarosserie mit einer Frontfensterscheibe bekannt, die sich weit in den Dachbereich des Fahrzeugs und über die Sitze der Fahrgastzelle erstreckt. Wenn eine solche Frontfensterscheibe auf ihrer ganzen Ausdehnung lichtdurchlässig ist, ist die Neigung der Fahrgastzelle, sich in der Sonne aufzuheizen, sehr hoch.

Aus US 4 674 789 A1 ist ein Fahrzeug mit einer sich bis ins Dach hinein erstreckenden Frontfensterscheibe bekannt, bei dem als Sonnenschutz ein Plattenelement mit einer an seiner Vorderkante angelenkten Sonnenblende unter einem metallischen Teil des Dachs heraus nach vorn gezogen werden kann. Um das Plattenelement aufnehmen zu können, muss die Ausdehnung des metallischen Teils in Fahrzeuglängsrichtung wenigstens so groß sein wie die des Plattenelements.

Aufgabe der vorliegenden Erfindung ist, ein Kraftfahrzeug zu schaffen, bei dem auch bei großen Abmessungen der Frontfensterscheibe sowohl eine übermä- ßige Aufheizung vermieden als auch ein sicher handhabbarer Blendschutz angebo- ten werden kann.

Die Aufgabe wird gelöst durch ein Kraftfahrzeug mit den Merkmalen des Anspruchs 1. Wenn das Fahrzeug bei Sonne unterwegs ist, wird sich die Son- nenschutzeinheit im Allgemeinen in einer aktiven Position befinden, in der durch Klappen der Sonnenblende im Bedarfsfall auch ein Blendschutz realisierbar ist. Die Ausbildung als Rollo ermöglicht eine platzsparende Unterbringung der Sonnen- schutzeinheit bei Nichtgebrauch, so dass die Abmessungen eines Dachbereichs, der die Sonnenschutzeinheit in diesem Fall aufnimmt, klein gehalten und die Front- fensterscheibe dementsprechend groß gemacht werden kann.

Vorzugsweise erstreckt sich die Frontfensterscheibe bis in den Be- reich des Fahrzeugdachs.

Eine solche Frontfensterscheibe kann insbesondere ein Verhältnis von Länge zu Breite von 0,7 bis 1,6, vorzugsweise von 0,9 bis 1,6 aufweisen.

Wenn das Fahrzeugdach in an sich bekannter Weise einen Dach- rahmen aufweist, der zwei Längsrahmenteile und zwei Querrahmenteile umfasst, kann ein erstes Querrahmenteil am hinteren Ende der Längsrahmenteile angeord- net sein, während ein zweites Querrahmenteil, um Platz für die Frontfensterscheibe zu schaffen, vorzugsweise im Bereich zwischen den Enden der Längsrahmenteile angeordnet ist.

Für die Steifigkeit der Karosserie ist es zweckmäßig, wenn das zweite Querrahmenteil sich zwischen B-Säulen erstreckt.

In einem inaktiven Zustand ist die Sonnenschutzeinheit vorzugweise zwischen das Fahrzeugdach und eine Fahrzeuginnenhaut einführbar.

Die Sonnenblende kann zusammen mit der Sonnenschutzeinheit zwischen das Fahrzeugdach und die Fahrzeuginnenhaut einführbar sein.

Vorzugsweise ist die Sonnenblende an einer vorderen Querstange der Sonnenschutzeinheit angeordnet.

Diese vordere Querstange kann in einer Einführung der Karosserie, insbesondere an einer A-Säule, einhängbar sein. Diese Einführung markiert eine aktive Position der Sonnenschutzeinheit, in der die Sonnenblende sich in einer Position befindet, in der sie durch Ausklappen einen wirksamen Blendschutz liefern kann.

Die Einführung sollte zweckmäßigerweise so gestaltet sein, dass sie ein beim Klappen der Sonnenblende auf diese ausgeübtes Drehmoment formschlüssig an die Karosserie überträgt und so eine Torsionsbelastung von Flächenteilen der Sonnenschutzeinheit beim Klappen der Sonnenblende vermeidet bzw. einen sicheren Halt der Sonnenblende in ihrer jeweils vom Fahrer eingestellten Stellung gewährleistet.

Ein Dachfensterbereich der Frontfensterscheibe kann zumindest teilweise eingefärbt sein, um die Aufheizung der Fahrgastzelle auch dann einzuschränken, wenn sich die Sonnenschutzeinheit in ihrer inaktiven Stellung befindet.

Begrifflich kann an der Frontfensterscheibe ein zur Durchsicht in überwiegend horizontaler Richtung ausgebildeter Fensterbereich, und ein sich daran anschließendenr, zur Durchsicht in überwiegend vertikaler Richtung ausgebildeter Dachfensterbereich unterschieden werden.

In einer bevorzugten Ausführungsform weist zumindest der Fensterbereich und/oder der Dachfensterbereich im Querschnitt eine konvexe Form auf. Bevorzugt schließen dabei die Sekanten am Übergang zwischen Fensterbereich und Dachfensterbereich einen Winkel zwischen 90° und 150° ein. Insbesondere erstreckt sich die Sekante des Dachfensterbereiches parallel zu einer horizontal angeordneten Ebene oder schließt mit dieser einen spitzen Winkel von 0° bis 15° ein.

Für eine besonders gleichmäßige und somit ablösefreie Umströmung des vorderen bzw. hinteren Fahrzeugbereiches sind der Fensterbereich und der Dachfensterbereich als ein einteiliger Fensterbereich ausgebildet. Mit anderen Worten: Der Fensterbereich ist mit dem Dachfensterbereich einstückig ausgebildet. Somit sind durch üblicherweise vorgesehene vordere bzw. hintere Dachrahmen resultierende Übergänge sicher vermieden. Insbesondere durch eine ansteigende Fensterlinie oder starke Neigung des Fensterbereiches, insbesondere der Heck-oder Frontscheibe, ist eine möglichst günstige Strömung ermöglicht. Bevorzugt sollte die Wölbung oder Neigung konstant verlaufen. Insbesondere verläuft die Änderung der Oberflächenkrümmung am Übergang vom Fensterbereich in den Dachfensterbereich vorzugsweise gleichmäßig. Neben der vergrößerten Sicht nach vorne, zur Seite und nach hinten sowie der verbesserten aerodynamischen Eigenschaften weist ein derartiger einen Teilbereich des Daches überströmender Fensterbereich auch eine besonders gute und ansprechende Formgebung auf.

Durch einen stufenlosen Übergang eines Fensterbereiches von der Gürtellinie des Innenraumes bis in das Dach hinein ist eine möglichst ablösefreie Umströmung des Fahrzeugs ermöglicht. Darüber hinaus kann durch einen derartigen durchgehenden Fensterbereich der vordere Dachrahmen, insbesondere der Dachrahmen zwischen der A-Säule, entfallen. Je nach Art und Ausführung erstreckt sich der Dachfensterbereich bevorzugt bis zur Dachmitte, insbesondere bis zum mittig angeordneten Dachspriegel.

Für einen besonders guten Schutz gegen hohe mechanische und/oder thermische Belastungen und ein besonders gutes Bruch- oder Splitterverhalten des Fensterbereiches und des Dachfensterbereiches ist die Frontfensterscheibe zweckmäßigerweise aus Sicherheitsglas, insbesondere Silikatglas, gebildet. Bevorzugt ist ein Verbund-Sicherheitsglas (kurz VSG genannt). Eine derartige aus einem Verbund-Sicherheitsglas gebildete Frontfensterscheibe oder Windschutzscheibe weist ein normales Splitterbild auf, bei welcher auch nach Scheibenbruch eine Durchsicht noch ermöglicht ist.

Hierzu sind zwei Glasscheiben über eine Kunststofffolie, z.B. Polyvinylbutyral, miteinander verklebt. Je nach Art und Ausführung der Kunststofffolie, z.B. Anordnung einer zusätzlichen Kunststofffolie bei einer Sekuriflex-Scheibe sind besonders gute optische und mechanische Eigenschaften, wie z.B. Abrieb und Kratzfestigkeit des Fensterbereiches gegeben.

Zur Reduzierung der Aufheizung des Fahrgastinnenraums durch Sonneneinstrahlung ist zweckmäßigerweise der Dachfensterbereich zumindest teilweise eingefärbt. Darüber hinaus kann zusätzlich auch der Fensterbereich eingefärbt oder getönt sein. Vorzugsweise ist der Dachfensterbereich zumindest teilweise dunkler als der Fensterbereich eingefärbt. Beispielsweise ist der Fensterbereich gegenüber dem Dachfensterbereich mit steigendem Tönungsgrad grün oder bronzefarben eingefärbt. Durch eine derartig grün oder bronzefarben eingefärbte Scheibe ist diese neben der Einsetzung als Sichtscheibe auch als Wärmeschutzglas eingesetzt, um die Transmission für Infrarotlicht stärker als für die kürzeren Wellen zu beschränken.

Zum Schutz des Fensterbereiches, insbesondere des Dachfensterbereiches vor Vereisung oder Beschlagen ist dieser bevorzugt zumindest teilweise mit einem Heizleiter und/oder Stromleiter versehen. Der Stromleiter dient dabei insbesondere der Versorgung von elektrischen Komponenten, z.B. eines elektrisch ablenkbaren Innenspiegels. Je nach Art und Ausführung eines derartigen Dachfensterbereiches wird der Heizleiter und/oder Stromleiter beispielsweise im sogenannten Siebdruckverfahren auf das Sicherheitsglas aufgebracht und während eines Vorspannprozesses aufgesintert. Durch eine weitere Galvanisierung wird der Heizleiter verstärkt, vergütet und gegen Umwelteinflüsse geschützt.

Ferner werden z.B. bei den sogenannten VSG-Scheiben als Heizleiter ausgebildete Heizdrähte in Wellenlinien in der Art einer Klebefolie in das Sicherheitsglas eingebracht. Dabei werden die einzelnen Heizdrähte in Reihe und/oder parallel verschaltet, um den vorgesehenen Widerstand zu erzielen.

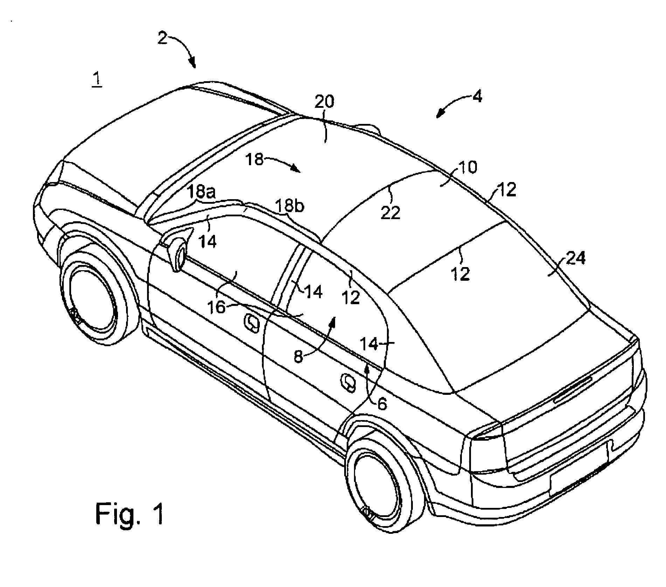

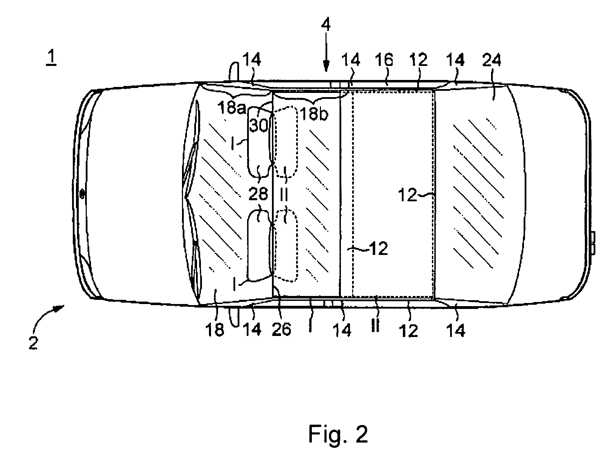

Ausführungsbeispiele der Erfindung werden anhand einer Zeichnung näher erläutert. Darin zeigen: Figur 1 schematisch in perspektivischer Darstellung ein Fahrzeug mit einer Frontfensterscheibe, und Figur 2 schematisch ein Fahrzeug in Draufsicht mit einer Frontfensterscheibe und einer längsbeweglichen Sonnenschutzeinheit.

Einander entsprechende Teile sind in allen Figuren mit den gleichen Bezugszeichen versehen.

Figur 1 zeigt ein Fahrzeug 1 mit einem Karosserieaufbau 2. Der Karosserieaufbau 2 ist eine selbsttragende Karosserie, welche einen oberen, oberhalb einer Gürtellinie 6 eines Innenraumes 8 verlaufenden Aufsatz 4 umfasst. Der Innenraum 8 ist durch ein Dach 10 abgedeckt. Der obere Aufsatz 4 umfasst einen Dachrahmen 12, der aus zwei sich entlang der jeweiligen Längsseite des Fahrzeugs 1 erstreckende und mindestens das Fahrzeugdach 10 seitlich begrenzende Längsrahmenteile ausweist. Das Dach 10 und der obere Dachrahmen 12 des oberen Aufsatzes 4 ist über mehrere vertikal verlaufende Dachverstärkungsholme 14, insbesondere die A-, B- und C-Säule, nach unten auf die Gürtellinie 6 abgestützt, wobei beispielsweise auch die B-Säule entfallen kann. Unterhalb des jeweiligen Dachrahmens 12 zwischen Hochstreben oder den Verstärkungsholmen 14 erstreckt sich seitlich ein aus mehreren Scheiben gebildeter Seitenfensterbereich 16.

Darüber hinaus weist der obere Aufsatz 4 zwischen den Längsrahmenteilen des Dachrahmens 12 in einer Fahrzeugöffnung eine Front- und/oder Heckfensterscheibe 18 auf. Die Front- und/oder Heckfensterscheibe 18 ist durch einen Fensterbereich 18a und einen daran anschließenden Dachfensterbereich 18b gebildet. Somit bildet die Front- und/oder Heckfensterscheibe 18 im Ausführungsbeispiel nach Figur 1 eine sich mindestens über das Dach 10 erstreckende Frontscheibe 20. Durch eine derartige in das Dach 10 verlängerte Frontscheibe 20 ist ein besonders großes Panoramafenster gebildet. Die Front- und/oder Heckfensterscheibe 18 erstreckt sich dabei in Längsrichtung bis hin zu einen Querrahmenteil des Dachrahmens 12. Bevorzugt erstreckt sich der Dachfensterbereich 18b bis zum mittleren Bereich des Dachs 10, vorzugsweise bis auf Höhe des als mittlere Hochstrebe ausgebildeten Verstärkungsholm 14, d.h. der B-Säule. D.h. der Dachfensterbereich 18b wird vom im Dach 10 mittig angeordneten als Querrahmenteil ausgebildeten Dachspriegel 22 begrenzt. Der nicht lichtdurchlässige Dachbereich des Dachs 10 erstreckt sich dabei vom Dachspriegel 22 bis zu einem Querrahmenteil des Dachrahmens, das in Längsrichtung gesehen am hinteren Ende zwischen den beiden Längsrahmenteilen angeordnet ist.

Die Frontscheibe 20 ist eine durchgehende Glasfläche, so dass der Fensterbereich 18a und der Dachfensterbereich 18b einteilig ausgebildet sind. Durch eine derartig verlängerte und durchgehende Frontscheibe 20, welche eine möglichst konstante Wölbung oder Neigung aufweist, ist eine besonders sportliche und aerodynamische Form bei gleichzeitig größtmöglicher Sicht in Art eines Panoramafensters gegeben. Sowohl für den Fahrer als auch für die im Font sitzenden Passagiere oder Insassen des Fahrzeugs ist ein besonders großes Sichtfeld ermöglicht.

Für einen besonders guten Schutz gegen hohe mechanische und/oder thermische Belastungen ist die Front- und/oder Heckfensterscheibe 18 aus Sicherheitsglas, insbesondere Silikatglas, gebildet. Die Windschutz- oder Frontscheibe 20 ist bevorzugt als Verbund-Sicherheitsglas ausgeführt.

Die Fensterscheibe 18 weist im Querschnitt zumindest in einem der beiden Bereiche, d.h. im Fensterbereich 18a oder im Dachfensterbereich 18b, eine konvexe Form auf. Am Übergang der beiden Fensterbereiche 18a und 18b schließen die Sekanten einen Winkel zwischen 90° bis 150° ein. Die Sekante des Dachfensterbereichs 18b erstreckt sich parallel zu einer horizontal angeordneten Ebene oder schließt mit dieser einen spitzen Winkel von 0° bis 15° ein. Bevorzugt weist die Fensterscheibe 18 eine Länge zu Breite im Verhältnis von 0,7 bis 1,6, vorzugsweise von 0,9 bis 1,6 auf.

Figur 2 zeigt das Fahrzeug 1 in Draufsicht mit einer als Frontscheibe 20 ausgebildeten vorderen Front- und/oder Heckfensterscheibe 18. Zum Schutz vor Sonne ist zwischen den Dachholmen 12 eine längsbewegliche Sonnenschutzeinheit 26 angeordnet. Die Sonnenschutzeinheit 26 ist als Rollo ausgebildet. Dazu wird die Sonnenschutzeinheit 26 in nicht näher dargestellten Führungselementen, welche entlang der seitlichen Dachrahmen angeordnet sind, geführt. Je nach Einstellung kann die längsbewegliche Sonnenschutzeinheit 26 in den Führungselemente zwischen zwei Endpositionen - einem geöffneten oder einem geschlossenen Zustand bewegt werden.

Im bestimmungsgemäßen Zustand, d.h. im geöffneten Zustand I der Sonnenschutzeinheit 26 ist diese in den lichtdurchlässigen Dachfensterbereich 18b eingeführt. Im geschlossenen oder Ruhezustand II wird die Sonnenschutzeinheit 26 in eine Öffnung zwischen dem Fahrzeugdach 4 und einer Fahrzeuginnenhaut, dem sogenannten Dachhimmel, eingeführt.

Zusätzlich zur längsbeweglichen großflächigen Sonnenschutzeinheit 26 kann ein insassenbezogener Sonnenschutz vorgesehen sein, welcher als Sonnenblenden 28 ausgebildet ist. Dabei sind die Sonnenblenden 28 beispielsweise an einer vorderen Querstange 30 der Sonnenschutzeinheit 26 angeordnet. Die Sonnenblenden 28 werden im hochgeklappten Zustand zusammen mit der Sonnenschutzeinheit 26 in die Öffnung im Dachhimmel eingeführt.

Alternativ oder zusätzlich kann der Dachfensterbereich 18b eingefärbt, insbesondere getönt sein. In einer bevorzugten Ausführungsform ist der Dachfensterbereich 18b zumindest teilweise dunkler als der Fensterbereich 18a eingefärbt.

Zum Schutz vor Vereisung kann die Fensterscheibe 18 des Weiteren zumindest teilweise mit einem Heizleiter in nicht näher dargestellter Art und Weise versehen sein. Alternativ oder zusätzlich kann die Fensterscheibe 18 mit einem Stromleiter versehen sein. Hierdurch kann beispielsweise ein elektrisch ablenkbarer Innenspiegel oder eine andere elektrische Komponente elektrisch versorgt werden.

Die Querstange 30 der Sonnenschutzeinheit 26 wird bevorzugt an dem betreffende Dachverstärkungsholm 14 - bei der Frontscheibe 20 die vordere A-Säule und bei der verlängerten Heckscheibe 24 die hintere C-Säule - in dafür vorgesehene Einführungen eingehängt. Die Einführung muss dabei derart gestaltet sein, dass ein durch das Klappen der Sonnenblenden hervorgerufenes Drehmoment formschlüssig übertragen werden kann. Alternativ zur Einhängung der Sonnenschutzeinheit 26 in den Dachverstärkungsholmen 14 können entsprechend durchsichtig, z.B. aus Plexiglas gefertigte Einführungen an die betreffende verlängerte Frontscheibe 20 bzw. Heckscheibe 24 aufgebracht, insbesondere geklebt sein.

### Bezugszeichenliste

- 1: Fahrzeug
- 2: Karosserieaufbau
- 4: Aufsatz
- 6: Gürtellinie
- 8: Innenraum
- 10: Fahrzeugdach
- 12: Dachrahmen
- 14: Dachverstärkungsholme
- 16: Seitenfensterbereich
- 18: Front- und/oder Heckfensterscheibe
- 18a: Fensterbereich
- 18b: Dachfensterbereich
- 20: Frontscheibe
- 22: Dachspriegel
- 24: verlängerte Heckscheibe
- 26: Sonnenschutzeinheit
- 28: Sonnenblenden
- 30: Querstange

## Patentansprüche

1. Kraftfahrzeug (1) mit einer Frontfensterscheibe (18) und wenigstens einer an einer beweglichen Sonnenschutzeinheit (26) angebrachten, an der Frontfensterscheibe (18) platzierbaren klappbaren Sonnenblende (28), **dadurch gekennzeichnet, dass** die Sonnenschutzeinheit (26) als Rollo ausgebildet und zwischen das Fahrzeugdach (4) und eine Fahrzeuginnenhaut einführbar ist.

2. Kraftfahrzeug nach Anspruch 1, **dadurch gekennzeichnet, dass** die Frontfensterscheibe (18) sich bis in den Bereich des Fahrzeugdachs (10) erstreckt.

3. Kraftfahrzeug nach Anspruch 2, **dadurch gekennzeichnet, dass** das Fahrzeugdach (10) einen Dachrahmen (12) aufweist, der zwei Längsrahmenteile und zwei Querrahmenteile umfasst, wobei ein erstes Querrahmenteil am hinteren Ende der Längsrahmenteile und ein zweites Querrahmenteil (22) im Bereich zwischen den Längsrahmenteilenden angeordnet ist.

4. Kraftfahrzeug nach Anspruch 3, **dadurch gekennzeichnet, dass** das zweite Querrahmenteil (22) sich zwischen B-Säulen (14) erstreckt.

5. Kraftfahrzeug nach einem der vorhergehenden Ansprüche, **dadurch gekennzeichnet, dass** die Sonnenschutzeinheit (26) in Längsrichtung des Kraftfahrzeugs beweglich ist.

6. Kraftfahrzeug nach einem der vorhergehenden Ansprüche, **dadurch gekennzeichnet, dass** die Sonnenblende (28) mit der Sonnenschutzeinheit (26) zwischen das Fahrzeugdach (4) und die Fahrzeuginnenhaut einführbar ist.

7. Kraftfahrzeug nach einem der vorhergehenden Ansprüche, **dadurch gekennzeichnet, dass** die Sonnenblende an einer vorderen Querstange (30) der Sonnenschutzeinheit (26) angeordnet ist.

8. Kraftfahrzeug nach Anspruch 7, **dadurch gekennzeichnet, dass** die vordere Querstange (30) in eine Einführung einer A-Säule einhängbar ist.

9. Kraftfahrzeug nach Anspruch 8, **dadurch gekennzeichnet, dass** die Einführung gestaltet ist, um ein beim Klappen der Sonnenblende (28) ausgeübtes Drehmoment formschlüssig zu übertragen.

10. Kraftfahrzeug nach einem der vorhergehenden Ansprüche, bei der die Frontfensterscheibe (18) ein Längen- zu Breitenverhältnis von 0,7 bis 1,6, vorzugsweise von 0,9 bis 1,6 aufweist.

11. Kraftfahrzeug nach einem der vorhergehenden Ansprüche, bei dem ein Dachfensterbereich (18b) der Frontfensterscheibe (18) zumindest teilweise eingefärbt ist.

12. Kraftfahrzeug nach einem der vorhergehenden Ansprüche , **dadurch gekennzeichnet, dass** die Frontfensterscheibe (18) zumindest bereichsweise im Querschnitt eine konvexe Form aufweist.

## Claims

1. A motor vehicle (1), comprising a front window pane (18) and at least one foldable sun visor (28) which is attached to a movable sun protection unit (26) and can be placed on the front window pane (18), **characterized in that** the sun protection unit (26) is arranged as a roller blind and can be introduced between the vehicle roof (4) and a passenger compartment lining.

2. A motor vehicle according to claim 1, **characterized in that** the front window pane (18) extends up into the region of the vehicle roof (10).

3. A motor vehicle according to claim 2, **characterized in that** the vehicle roof (10) comprises a roof frame (12) having two longitudinal frame parts and two transverse frame parts, wherein a first transverse frame part is arranged on the rear end of the longitudinal frame parts and a second transverse frame part (22) is arranged in the region between the longitudinal frame part ends.

4. A motor vehicle according to claim 3, **characterized in that** the second transverse frame part (22) extends between the B-pillars (14).

5. A motor vehicle according to one of the preceding claims, **characterized in that** the sun protection unit (26) is movable in the longitudinal direction of the motor vehicle.

6. A motor vehicle according to one of the preceding claims, **characterized in that** the sun visor (28) can be introduced with the sun protection unit (26) between the vehicle roof (4) and the passenger compartment lining.

7. A motor vehicle according to one of the preceding claims, **characterized in that** the sun visor is arranged on a front transverse bar (30) of the sun protection unit (26).

8. A motor vehicle according to claim 7, **characterized in that** the transverse bar (30) can be hooked into a lead-in of an A-pillar.

9. A motor vehicle according to claim 8, **characterized in that** the lead-in is arranged in order to transmit in an interlocking manner a torque exerted during the folding of the sun visor (28).

10. A motor vehicle according to one of the preceding claims, wherein the front window pane (18) has a ratio of length to width of 0.7 to 1.6, preferably 0.9 to 1.6.

11. A motor vehicle according to one of the preceding claims, wherein a roof window region (18b) of the front window pane (18) is tinted at least partially.

12. A motor vehicle according to one of the preceding claims, **characterized in that** the front window pane (18) has a convex form in its cross-section at least in part.

## Revendications

1. Véhicule à moteur (1) avec une vitre de pare-brise (18) et au moins un volet pare-soleil (28) rabattable disposé sur une unité de pare-soleil mobile (26) et pouvant être placé sur la vitre de pare-brise (18), **caractérisé en ce que** l'unité de pare-soleil (26) est conformée comme un store et peut être introduite entre le toit du véhicule (4) et une enveloppe intérieure du véhicule.

2. Véhicule à moteur selon la revendication 1, **caractérisé en ce que** la vitre de pare-brise (18) s'étend jusqu'au niveau du toit du véhicule (10).

3. Véhicule à moteur selon la revendication 2, **caractérisé en ce que** le toit du véhicule (10) présente un cadre de toit (12) qui comprend deux parties de toit longitudinales et deux parties de toit transversales, une première partie de toit transversale étant disposée à l'extrémité arnère des parties de toit longitudinales et une deuxième partie de toit transversale (22) dans la zone comprise entre les extrémités des parties de toit longitudinales.

4. Véhicule à moteur selon la revendication 3, **caractérisé en ce que** la deuxième partie de toit transversale (22) s'étend entre les montants B (14).

5. Véhicule à moteur selon l'une des revendications précédentes, **caractérisé en ce que** l'unité de pare-soleil (26) est mobile dans le sens longitudinal du véhicule à moteur.

6. Véhicule à moteur selon l'une des revendications précédentes, **caractérisé en ce que** le volet pare-soleil (28) peut être introduit avec l'unité pare-soleil (26) entre le toit du véhicule (4) et l'enveloppe intérieure du véhicule.

7. Véhicule à moteur selon l'une des revendications précédentes, **caractérisé en ce que** le volet pare-soleil est disposé sur une barre transversale antérieure (30) de l'unité de pare-soleil (26).

8. Véhicule à moteur selon la revendication 7, **caractérisé en ce que** la barre transversale antérieure (30) peut être accrochée dans un réceptacle d'un montant A.

9. Véhicule à moteur selon la revendication 8, **caractérisé en ce que** le réceptacle est conçu pour transmettre par engagement positif un couple de rotation exercé lorsque le volet pare-soleil (28) est rabattu.

10. Véhicule à moteur selon l'une des revendications précédentes, dans lequel la vitre de pare-brise (18) présente un rapport entre longueur et largeur de 0,7 à 1,6, de préférence de 0,9 à 1,6.

11. Véhicule à moteur selon l'une des revendications précédentes, dans lequel une zone de fenêtre de toit (18b) de la vitre de pare-brise (18) est au moins en partie teintée.

12. Véhicule à moteur selon l'une des revendications précédentes, **caractérisé en ce que** la vitre de pare-brise (18) présente au moins en partie une forme en section convexe.
